# EUROPEAN PATENT APPLICATION

(11) **EP 3 324 617 A1**
(43) Date of publication of application: **23.05.2018**
(21) Application number: 16792001.6
(22) Date of filing: 14.04.2016
(51) Int. Cl.: H04N 7/15

(54) **CONTROL METHOD, SYSTEM AND DEVICE FOR CONFERENCE TERMINAL RIGHTS, AND STORAGE MEDIUM**

(30) Priority: 14.07.2015 CN 201510411183
(71) Applicant: ZTE Corporation, Shenzhen, Guangdong 518057 (CN)
(72) Inventor: QI, Wei, Shenzhen City Guangdong 518057 (CN)
(74) Representative: Nordmeyer, Philipp Werner
(86) International application number: PCT/CN2016/079306
(87) International publication number: WO 2016/180151

(57) **Abstract**

Provided are a control method, system and device for conference terminal rights, and a storage medium. The method comprises: after a first conference terminal accesses a conference, receiving an operation request of the first conference terminal, wherein the operation request is used for instructing an operation performed on the first conference terminal, and a plurality of conference terminals which access the conference have different priorities from each other; and judging whether the operation corresponding to the operation request is a pre-set operation corresponding to the priority of the first conference terminal, if so, allowing the first conference terminal to perform the operation, and if not, preventing the first conference terminal from performing the operation.

## Description

### FIELD OF THE INVENTION

The present disclosure relates to the field of communications, and for example, relates to a method, a system, and an apparatus for controlling conference terminal rights, and a storage medium.

### BACKGROUND

In a conference television system, a network mode has realized graded (hierarchical) cascades, and graded conferences, such as a province, city and county three-graded conference, can be held by a graded video conference system. However, in a graded video conference system, each conference grade has the same terminal right, resulting in poor user experience.

### SUMMARY

According to embodiments of the present disclosure, a control method, system and apparatus for conference terminal rights, and storage medium are provided, improving the user experience.

In an embodiment of the present disclosure, there is provided a control method for conference terminal rights, the method including: receiving an operation request from a first conference terminal after the first conference terminal accesses a conference, wherein the operation request is used to instruct an operation performed on the first conference terminal, and a plurality of conference terminals accessing the conference have different priorities from each other; and judging whether the operation corresponding to the operation request is a preset operation corresponding to a priority of the first conference terminal, wherein allowing the first conference terminal to perform the operation if a judgment result is YES, or refusing the first conference terminal to perform the operation if the judgment result is NO.

In an embodiment of the present disclosure, the step of judging whether the operation corresponding to the operation request is a preset operation corresponding to the priority of the first conference terminal includes: judging whether the operation corresponding to the operation request is present in a rights list, wherein the rights list is used to store the preset operation corresponding to the priority of the first conference terminal.

In an embodiment of the present disclosure, before the first conference terminal accesses the conference, the method further includes: judging whether access resources required by the first conference terminal for accessing the conference are sufficient; and releasing access resources of a second conference terminal having a priority lower than the priority of the first conference terminal and allocating the released access resources to the first conference terminal in a case that the access resources required by the first conference terminal for accessing the conference are not sufficient.

According to another embodiment of the present disclosure, there is provided a control method for conference terminal rights, the method including: judging whether access resources required by a first conference terminal for accessing a conference are sufficient before the first conference terminal accesses the conference, wherein conference terminals accessing the conference have different priorities; and releasing access resources of a second conference terminal having a priority lower than a priority of the first conference terminal and allocating the released access resources to the first conference terminal in a case that the access resources required by the first conference terminal for accessing the conference are not sufficient.

In an embodiment of the present disclosure, there is also provided a control method for conference terminal rights, the method including: a graphical user interface (GUI) unit, which is configured to set a priority of each conference terminal for a conference and to configure a rights list of each conference terminal corresponding to the priority of the respective conference terminal, wherein the rights list is used for storing a preset operation corresponding to the respective conference terminal; and a multi-point control signaling unit (micro-controller unit, MCU), which is configured to judge whether an operation corresponding to an operation request of a first conference terminal is present in the rights list of the first conference terminal configured by the GUI unit, wherein the first conference terminal is allowed to perform the operation if a judgment result is YES, or the first conference terminal is refused to perform the operation if the judgment result is NO, and wherein the operation request is used for indicating an operation of the first conference terminal.

In an embodiment of the present disclosure, the system further includes: a resource management system (RMS) unit, which is configured to allocate access resources required by the first conference terminal for accessing the conference to the first conference terminal in a calling process of the first conference terminal.

In an embodiment of the present disclosure, the RMS unit is further configured to judge whether the access resources required by the first conference terminal for accessing the conference are sufficient, and to release access resources of a second conference terminal having a priority lower than the priority of the first conference terminal and allocate the released access resources to the first conference terminal in a case that the access resources required by the first conference terminal for accessing the conference are not sufficient.

In an embodiment of the present disclosure, there is also provided a control apparatus for conference terminal rights, the apparatus comprising: a first receiving module, which is configured to receive an operation request from a first conference terminal after the first conference terminal accesses a conference, wherein the operation request is used to instruct an operation performed on the first conference terminal, and a plurality of conference terminals accessing the conference have different priorities from each other; a first judgment module, which is configured to judge whether the operation corresponding to the operation request is a preset operation corresponding to a priority of the first conference terminal; and a first execution module, which is configured to allow the first conference terminal to perform the operation if it is judged that the operation corresponding to the operation request is the preset operation corresponding to the priority of the first conference terminal, or refuse the first conference terminal to perform the operation if it is judged that the operation corresponding to the operation request is not the preset operation corresponding to the priority of the first conference terminal.

In an embodiment of the present disclosure, the first judgment module comprises: a first judgment unit, which is configured to judge whether the operation corresponding to the operation request is present in a rights list, wherein the rights list is used to store the preset operation corresponding to the priority of the first conference terminal.

In an embodiment of the present disclosure, the apparatus further comprises: a second judgment module, which is configured to judge whether access resources required by the first conference terminal for accessing the conference are sufficient before the first conference terminal accesses the conference; and a first releasing-allocating module, which is configured to release access resources of a second conference terminal having a priority lower than the priority of the first conference terminal and allocate the released access resources to the first conference terminal in a case that the access resources required by the first conference terminal for accessing the conference are not sufficient.

According to another embodiment of the present disclosure, there is provided a control apparatus for conference terminal rights, the apparatus comprising: a third judgment module, which is configured to judge whether access resources required by a first conference terminal for accessing a conference are sufficient before the first conference terminal accesses the conference, wherein conference terminals accessing the conference have different priorities; and a second releasing-allocating module, which is configured to release access resources of a second conference terminal having a priority lower than the priority of the first conference terminal and allocate the released access resources to the first conference terminal in a case that the access resources required by the first conference terminal for accessing the conference are not sufficient.

According to another embodiment of present disclosure, there is provided a computer-readable storage medium storing computer-executable instructions which are configured to perform any one of the above mentioned control method for conference terminal rights.

According to yet another embodiment of the present disclosure, there is also provided a device, the device comprising: one or more processors; a memory; and one or more programs, which are stored in the memory and, when executed by the one or more processors, perform operations in any one of the above mentioned control method for conference terminal rights.

In an embodiment of the present disclosure, the conference terminals have different priorities, each priority corresponds to a different preset operation, and the operation of the conference terminal or the access to the conference is managed according to the priority of the conference terminal or the preset operation for the conference terminal, thus the conference terminals having different priorities can have different operation rights, the conference terminal having a higher priority has a priority in using limited system resources, a conference system more like a real conference scene is achieved, and the user experience is improved.

### BRIEF DESCRIPTION OF THE DRAWINGS

Fig. 1 is a first flowchart of a control method for conference terminal rights provided by an embodiment of the present disclosure;
Fig. 2 is a second flowchart of a control method for conference terminal rights provided by an embodiment of the present disclosure;
Fig. 3 is a first block diagram of a control system for conference terminal rights provided by an embodiment of the present disclosure;
Fig. 4 is a second block diagram of a control system for conference terminal rights provided by an embodiment of the present disclosure;
Fig. 5 is a first block diagram of a control apparatus for conference terminal rights provided by an embodiment of the present disclosure;
Fig. 6 is a second block diagram of a control apparatus for conference terminal rights provided by an embodiment of the present disclosure;
Fig. 7 is a third block diagram of a control apparatus for conference terminal rights provided by an embodiment of the present disclosure;
Fig. 8 is a flowchart of a control method for conference terminal rights provided by an alternative embodiment of the present disclosure;
Fig. 9 is a schematic diagram of a control system for conference terminal rights provided by an alternative embodiment of the present disclosure;
Fig. 10 is a schematic diagram illustrating a hardware structure of a device for performing a control method for conference terminal rights provided by an embodiment of the present disclosure.

### DETAILED DESCRIPTION OF THE EMBODIMENTS

The embodiments of the disclosure will be described below with reference to the accompanying drawings. It should be noted that, the embodiments in the disclosure and the various manners in the embodiments may be combined with each other if there is no conflict.

It should be noted that the terms "first", "second" and the like in the description and the claims of the present disclosure as well as the drawings mentioned above are used to distinguish similar objects, and are not intend to describe the specific sequence or order.

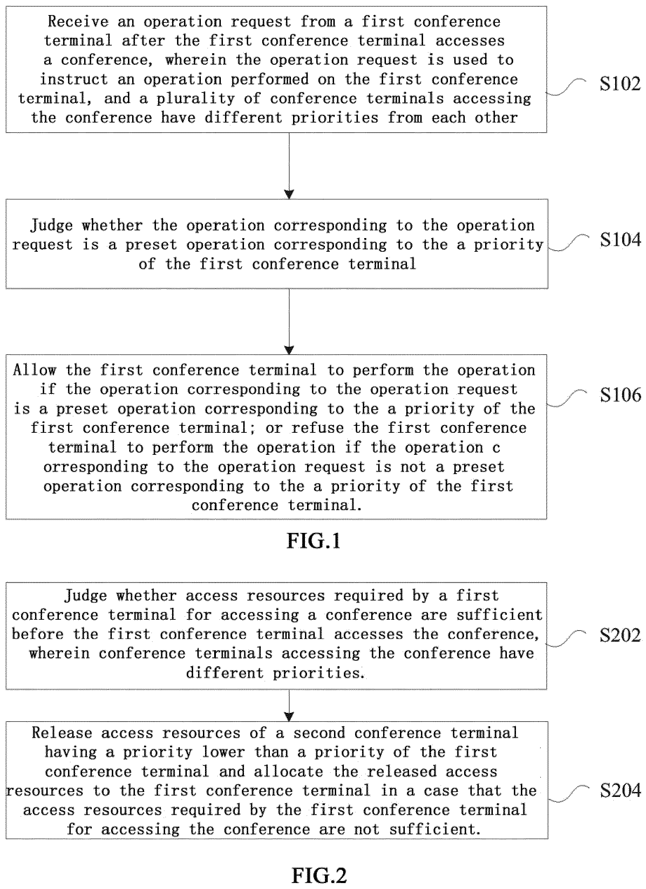

A control method for conference terminal rights is provided in an embodiment of the present disclosure. Fig. 1 is a first flowchart of the control method for conference terminal rights provided by the embodiment of the present disclosure. As shown in Fig. 1, the method includes the following steps:
Step S102: receiving an operation request from a first conference terminal after the first conference terminal accesses a conference, wherein the operation request is used to instruct an operation performed on the first conference terminal, and a plurality of conference terminals accessing the conference have different priorities from each other; and
Step S104: judging whether the operation corresponding to the operation request is a preset operation corresponding to a priority of the first conference terminal;
Step S106: allowing the first conference terminal to perform the operation if the operation corresponding to the operation request is the preset operation corresponding to the priority of the first conference terminal; or refusing the first conference terminal to perform the operation if the operation corresponding to the operation request is not the preset operation corresponding to the priority of the first conference terminal.

In the above mentioned steps, the conference terminals have different priorities, and each priority corresponds to a different preset operation. A rights management is performed on the operations of conference terminals according to the preset operation for the conference terminals, such that the conference terminals having different priorities can have different operation rights, thereby achieving a conference system more like a real conference scene and improving the user experience.

In an embodiment of the present disclosure, the step of judging whether the operation corresponding to the operation request is a preset operation corresponding to the priority of the first conference terminal may includes: judging whether the operation corresponding to the operation request is present in a rights list, wherein the rights list is used to store the preset operation corresponding to the priority of the first conference terminal.

In an embodiment of the present disclosure, before the first conference terminal accesses the conference, the method further includes: judging whether access resources required by the first conference terminal for accessing the conference are sufficient; and releasing access resources of a second conference terminal having a priority lower than the priority of the first conference terminal and allocating the released access resources to the first conference terminal in a case that the access resources required by the first conference terminal for accessing the conference are not sufficient. By releasing access resources of a conference terminal having a lower priority and allocating the released access resources to a conference terminal having a higher priority in a case that the access resources for accessing the conference are not sufficient, the conference terminal having a higher priority can have a priority in using limited resources of the system, such that the conference system can be more like a real conference scene, and the user experience is improved. Herein, the access resources may be a bandwidth occupied by each conference terminal, the number of conference terminals that a processor is able to control, and the like.

A control method for conference terminal rights is further provided in an embodiment of the present disclosure. Fig. 2 is a second flowchart of the control method for conference terminal rights provided by the embodiment of the present disclosure. As shown in Fig. 2, the flow includes the following steps:
Step S202: judging whether access resources required by a first conference terminal for accessing a conference are sufficient before the first conference terminal accesses the conference, wherein conference terminals accessing the conference have different priorities.
Step S204: releasing access resources of a second conference terminal having a priority lower than a priority of the first conference terminal and allocating the released access resources to the first conference terminal in a case that the access resources required by the first conference terminal for accessing the conference are not sufficient.

By means of the above steps, when a conference terminal is accessing a conference, access resources of a conference terminal having a lower priority are released and the released access resources are allocated to the conference terminal having a higher priority in a case that the access resources for accessing the conference are not sufficient. Therefore, the conference terminal having a higher priority can have a priority in using limited resources of the system, such that the conference system can be more like a real conference scene, thereby solving the problem of poor user experience due to the same conference terminal rights in the existing technology, and improving the user experience.

In an embodiment of the present disclosure, after the first conference terminal accesses the conference, the control method further includes: receiving an operation request from the first conference terminal, wherein the operation request is used to instruct an operation performed on the first conference terminal; and judging whether the operation corresponding to the operation request is a preset operation corresponding to the priority of the first conference terminal, wherein allowing the first conference terminal to perform the operation if a judgment result is YES, or refusing the first conference terminal to perform the operation if the judgment result is NO.

Since the conference terminals have different priorities, and each priority corresponds to a different preset operation, a right management is performed on the operations of the conference terminals according to the preset operations for the conference terminals, such that the conference terminals having different priorities can have different operation rights, thereby achieving a conference system more like a real conference scene, and improving the user experience.

In an embodiment of the present disclosure, the step of judging whether the operation corresponding to the operation request is a preset operation corresponding to the priority of the first conference terminal includes: judging whether the operation corresponding to the operation request is present in a rights list, wherein the rights list is used to store the preset operation corresponding to the priority of the first conference terminal.

Through the foregoing description of the embodiments, those skilled in the art can clearly understand that the methods according to the foregoing embodiments may be implemented by means of software along with a necessary universal hardware platform, and may certainly be implemented merely by hardware, but the former is preferable. Technical solutions of the present disclosure may be implemented in a form of computer software product, and the computer software product may be stored in a storage medium, such as an ROM/RAM, a magnetic disk, or an optical disk, and includes several instructions that enables a terminal device, which may be a mobile phone, a computer device, a server, or a network device, to execute the control method for conference terminal rights in the foregoing embodiments of the present disclosure.

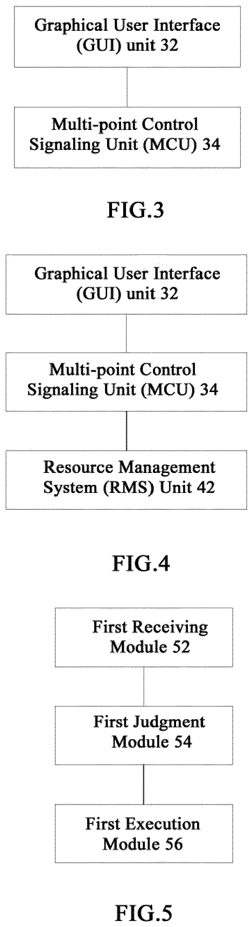

A control system for conference terminal rights is also provided in an embodiment of the present disclosure. Fig. 3 is a first block diagram of a control system for conference terminal rights provided by an embodiment of the present disclosure. As shown in Fig. 3, the system includes:
a graphical user interface (GUI) unit 32, which is configured to set a priority of each conference terminal for a conference and to configure a rights list of each conference terminal corresponding to the priority of the respective conference terminal, wherein the rights list is used for storing a preset operation corresponding to the respective conference terminal; and
a multi-point control signaling unit (MCU) 34, which is configured to judge whether an operation corresponding to an operation request of a first conference terminal is present in the rights list of the first conference terminal configured by the GUI unit 32, wherein the first conference terminal is allowed to perform the operation if a judgment result is YES, or the first conference terminal is refused to perform the operation if the judgment result is NO, and wherein the operation request is used for indicating an operation of the first conference terminal.

In the above system, the GUI unit 32 is used to set different priorities for each of the conference terminals, wherein the different priorities corresponds to different rights lists. The MCU 34 judges, according to a rights list of a conference terminal, whether the conference terminal is allowed to perform related operation, that is, the MCU 34 manages operation limits of the conference terminal according to the rights list. Therefore, the conference terminals having different priorities can have different operation rights, thereby achieving a conference system more like a real conference scene, and improving the user experience.

Fig. 4 is a second block diagram of a control system for conference terminal rights provided by an embodiment of the present disclosure. As shown in Fig. 4, the control system for conference terminal rights includes:
a resource management system (RMS) unit 42, which is configured to allocate access resources required by a first conference terminal for accessing the conference to the first conference terminal in a calling process of the first conference terminal.

In an embodiment of the present disclosure, the RMS unit 42 is configured to judge whether the access resources required by the first conference terminal for accessing the conference are sufficient, and to release access resources of a second conference terminal having a priority lower than the priority of the first conference terminal and allocate the released access resources to the first conference terminal in a case that the access resources required by the first conference terminal for accessing the conference are not sufficient. By releasing access resources of a conference terminal having a lower priority and allocating the released access resources to a conference terminal having a higher priority through the RMS unit 42 in a case that the access resources for accessing the conference are not sufficient, the conference terminal having a higher priority can have a priority in using limited resources of the system, such that the conference system can be more like a real conference scene, and the user experience is improved.

A control apparatus for conference terminal rights is also provided in an embodiment of the present disclosure. The control apparatus is configured to implement the foregoing embodiments and alternative implements. Redundant description would be omitted accordingly. As used hereinafter, the term "module" may be software, hardware, or a combination of the software and the hardware achieving a predetermined function. Although the apparatus described in the following embodiments may be implemented by means of software, the implementation by means of hardware or a combination of software and hardware is also possible and conceived.

Fig. 5 is a first block diagram of a control apparatus for conference terminal rights according to an embodiment of the present disclosure. As shown in Fig. 5, the apparatus includes:
a first receiving module 52, which is configured to receive an operation request from a first conference terminal after the first conference terminal accesses a conference, wherein the operation request is used to instruct an operation performed on the first conference terminal, and a plurality of conference terminals accessing the conference have different priorities from each other;
a first judgment module 54, which is configured to judge whether the operation corresponding to the operation request is a preset operation corresponding to a priority of the first conference terminal; and
a first execution module 56, which is configured to allow the first conference terminal to perform the operation if it is judged that the operation corresponding to the operation request is the preset operation corresponding to the priority of the first conference terminal, or refuse the first conference terminal to perform the operation if it is judged that the operation corresponding to the operation request is not the preset operation corresponding to the priority of the first conference terminal.

By means of the above apparatus, the conference terminals have different priorities, each priority corresponds to a different preset operation, and a rights management is performed on the operations of conference terminals according to the preset operations for the conference terminals. Therefore, the conference terminals having different priorities can have different operation rights, such that a conference system more like a real conference scene is achieved, the problem of poor user experience due to the same conference terminal rights in the existing technology is solved, and the user experience is improved.

In an embodiments of the present disclosure, the first judgment module 54 as set forth includes: a first judgment unit, which is configured to judge whether the operation corresponding to the operation request is present in a rights list, wherein the rights list is used to store the preset operation corresponding to the priority of the first conference terminal.

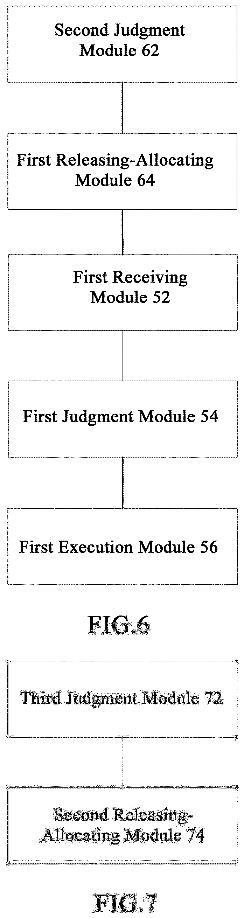

Fig. 6 is a second block diagram of a control apparatus for conference terminal rights provided by an embodiment of the present disclosure. As shown in Fig. 6, in addition to all of the modules as shown in Fig. 5, the apparatus further includes:
a second judgment module 62, which is configured to judge whether access resources required by the first conference terminal for accessing the conference are sufficient before the first conference terminal accesses the conference; and
a first releasing-allocating module 64, which is configured to release access resources of a second conference terminal having a priority lower than the priority of the first conference terminal and allocate the released access resources to the first conference terminal in a case that the access resources required by the first conference terminal for accessing the conference are not sufficient.

By releasing access resources of a conference terminal having a lower priority and allocating the released access resources to a conference terminal having a higher priority through the above apparatus in a case that the access resources for accessing the conference are not sufficient, the conference terminal having a higher priority can have a priority in using limited resources of the system, such that the conference system can be more like a real conference scene, and the user experience is improved.

Fig. 7 is a third block diagram of a control apparatus for conference terminal rights provided by an embodiment of the present disclosure. As shown in Fig. 7, the apparatus includes:
a third judgment module 72, which is configured to judge whether access resources required by a first conference terminal for accessing a conference are sufficient before the first conference terminal accesses the conference, wherein conference terminals accessing the conference have different priorities; and
a second releasing-allocating module 74, which is configured to release access resources of a second conference terminal having a priority lower than the priority of the first conference terminal and allocate the released access resources to the first conference terminal in a case that the access resources required by the first conference terminal for accessing the conference are not sufficient.

By releasing access resources of a conference terminal having a lower priority and allocating the released access resources to a conference terminal having a higher priority through the above apparatus in a case that the access resources for accessing the conference are not sufficient, the conference terminal having a higher priority can have a priority in using limited resources of the system, such that the conference system can be more like a real conference scene, and the user experience is improved.

The conference terminal rights control apparatus provided by this embodiment of the present disclosure may further include the first receiving module 52, the first judgment module 54 and the first execution module 56 in the foregoing embodiment. The first judgment module 54 in this embodiment may further include the first judgment unit in the foregoing embodiment. Optionally, the control apparatus in this embodiment may further include the second judgment module 62 and the first releasing-allocating module 64.

Since the conference terminals have different priorities, and each priority corresponds to a different preset operation, the apparatus as set forth can perform a right management on the operations of the conference terminals according to the preset operations for the conference terminals, such that the conference terminals having different priorities can have different operation rights, thereby achieving a conference system more like a real conference scene, and improving the user experience.

An alternative control method for conference terminal rights is also provided in an embodiment of the present disclosure, including:
Step A: terminal rights lists and grades on a graphical user interface (GUI) are preset at a user side, terminals to be called are added to an address book, and the corresponding grades for the respective terminals are configured, wherein the GUI sends information on the terminals, the grades, and the rights lists to an MCU, and the MCU stores the information on the terminals, the grades, and the rights lists in a database.
   Herein, IP addresses of all the conference terminals to access the conference are stored in the address book.
Step B: the GUI, the MCU and an RMS cooperate to hold a conference and call the terminals to access the conference.
Step C: the RMS judges whether resources required for calling the terminals are sufficient, judges the presence of a terminal with a lower grade in the conference by querying the database if it is judged that the resources are not sufficient, and hangs up the terminal with the lower grade and release the resources occupied thereby if it is judged that the terminal with the lower grade is present in the conference.
Step D: the RMS allocates the released resources to a terminal with a higher grade, ensuring that the terminal with the higher grade can make a call successfully.
Step E: after a terminal access the conference, if a user performs a certain operation on the terminal, the MCU needs to query the database to judge the grade of the terminal and search for the rights list corresponding to the grade according to the grade.
Step F: the MUC judges the presence of the operation of the terminal in the corresponding rights list.
Step G: the operation request of the terminal is allowed if the operation of the terminal is present in the rights list.
Step H: the operation request of the terminal is refused and a refusal message can be displayed to the user if the operation of the terminal is absent in the rights list.

It should be noted that, the grade of the terminal in this alternative embodiment corresponds to the priority of the conference terminal in the foregoing embodiment. Herein, the terminal may be the first conference terminal, the second conference terminal, or any conference terminal accessing the user side.

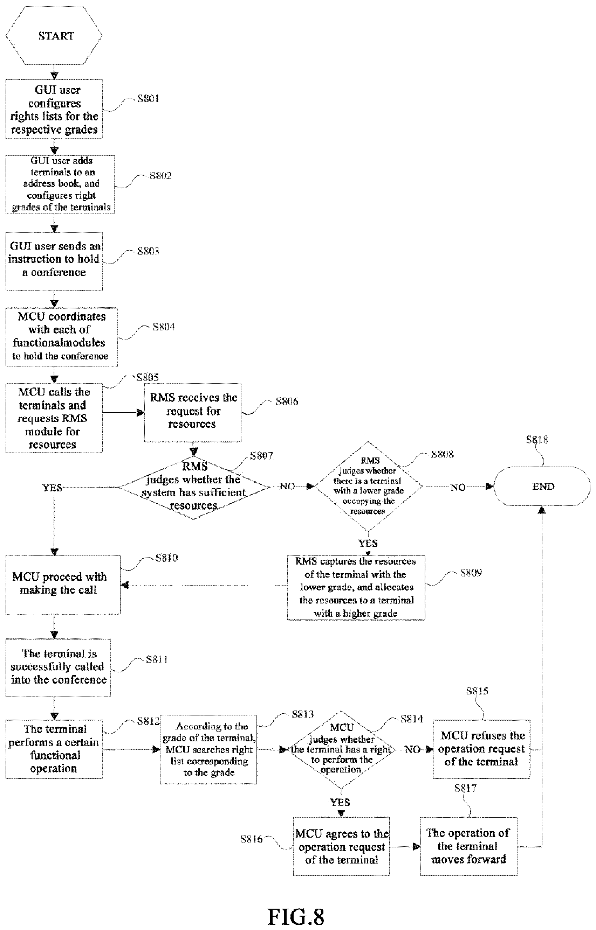

An alternative control method for conference terminal rights is also provided in an embodiment of the present disclosure. Fig. 8 is a flowchart of the control method for conference terminal rights provided by the alternative embodiment of the present disclosure. As shown in Fig. 8, the method includes the following steps:
Step S801: a user configures rights lists for the respective grades on a graphical user interface (GUI).
Step S802: on the graphical user interface (GUI), the user adds the terminals to be called to an address book, and configures the corresponding grades for the respective terminals.
Step S803: the user sends an instruction to hold a conference on the graphical user interface (GUI).
Step S804: an MCU coordinates with each of functional modules to hold the conference.
   Herein, the function modules are software processing modules and hardware processing modules included in the MCU.
Step S805: the MCU calls the terminals and requests an RMS module for resources required by the terminal call.
Step S806: the RMS module receives the request for resources required by the terminal call.
Step S807: the RMS judges whether the system has sufficient resources.
Step S808: in a case that the system does not have sufficient resources to allocate to the call, the RMS further judges whether there is a terminal with a lower grade occupying the resources in the system.
Step S809: in a case that there is a terminal with a lower grade occupying the resources in the system terminal, the resources of the terminal with the lower grade is captured to allocate to a terminal with a higher grade.
Step S810: the call flow moves forwards after the call obtains sufficient resources.
Step S811: the terminal is successfully called into the conference.
Step S812: a user performs a certain business operation on the terminal.
Step S813: according to the grade of the terminal, the MCU searches the right list corresponding to the grade.
Step S814: the MCU judges whether the terminal has a right to perform the operation.
Step S815: the operation request is refused if the MCU determines that the terminal does not have the right to perform the operation.
Step S816: the terminal is allowed to proceed with the operation if the MCU determines that the terminal has the right to perform the operation.
Step S817: the terminal proceeds with the operation.
Step S818: End.

It should be noted that, the grade of the terminal in this alternative embodiment corresponds to the priority of the conference terminal in the foregoing embodiments.

An alternative control system for conference terminal rights is also provided in an embodiment of the present disclosure, including:
a graphical user interface (GUI), through which an administrator can configure terminal devices to be called into an address book, configure right grades for the respective terminals, and configure a rights list for the respective grades, wherein different grades correspond to different rights lists;
a micro-point control signaling unit (MCU), configured to hold a conference and call the terminals to access the conference and judge the terminal(s) having a priority in calling according to an user's operating instruction on the GUI, wherein when a terminal has a certain operation request, allowance or refusal of the operation of the terminal could be judged according to the rights of the terminal; and
a resource management system (RMS) unit, configured to judge whether the system has sufficient resources in the calling process of a terminal, wherein allocate resources to a terminal that lately makes a call if the resources are sufficient, or release resources of a terminal with low grade and allocate the released resources to a terminal with high grade in a case that the resources for the terminal with high grade are not sufficient.

It should be noted that, functional part of the GUI in this alternative embodiment is the same as that of the GUI unit in the foregoing embodiment; the functional part implemented by the MCU in this alternative embodiment is the same as that implemented by the MCU in the foregoing embodiment; and the functional part implemented by the RMS unit in this alternative embodiment is the same as that implemented by the RMS unit in the foregoing embodiment.

According to the above system, by the way of presetting rights lists and grades on an MCU at an center office side so as to grade and pre-authorize the terminals to be called, the MCU can control the terminal that is called into the conference according to the grade and the corresponding authorization and resources obtained by the terminal, achieving an object that an administrator at the center office side collectively controls the terminals.

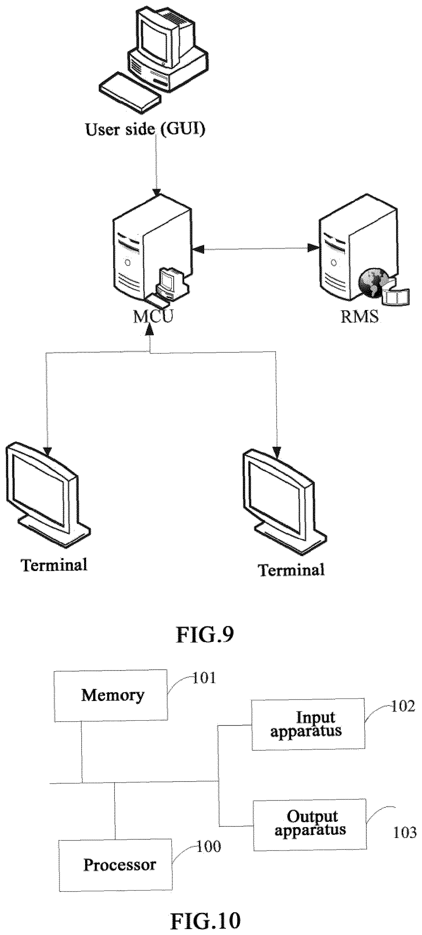

An alternative control system for conference terminal rights is further provided in an embodiment of the present disclosure. Fig. 9 is a schematic diagram of a control system for conference terminal rights according to an alternative embodiment of the present disclosure. As shown in Fig. 9, the system includes:
a graphical user interface (GUI), configured to configure rights lists of terminals and grades of the terminals, and through which a user convenes the terminals to hold a conference;
a multi-point control signaling unit (MCU), as a multi-point control unit, configured to coordinate other related modules to hold the conference, control a call from the terminals, and decide whether a related operation of a terminal can be executed according to the grade and the rights list of the terminal;
a resource management system (RMS) unit, configured to manage system resources, allocate the resources to the terminals when the terminals make a call, and capture resources of a terminal with a lower grade to allocate the captured resources to a terminal with a higher grade in a case that the resources are not sufficient; and
a terminal, configured as a device that sends and receives audio and video media information and display the same to a user.

It should be noted that, functional part of the GUI in this alternative embodiment is the same as that of the GUI unit in the foregoing embodiments; the functional part implemented by the MCU in this alternative embodiment is the same as that implemented by the MCU in the foregoing embodiments; and the functional part implemented by the RMS in this alternative embodiment is the same as that implemented by the RMS unit in the foregoing embodiments.

A storage medium is also provided by an embodiment of the present disclosure. Optionally, in the present embodiment, the above storage medium may be configured to store program codes for performing the following steps:
Step S1: receiving an operation request from a first conference terminal after the first conference terminal accesses a conference, wherein the operation request is used to instruct an operation performed on the first conference terminal, and a plurality of conference terminals accessing the conference have different priorities from each other;
Step S2: judging whether the operation corresponding to the operation request is a preset operation corresponding to a priority of the first conference terminal;
Step S3: allowing the first conference terminal to perform the operation if the operation corresponding to the operation request is the preset operation corresponding to the priority of the first conference terminal; or refusing the first conference terminal to perform the operation if the operation corresponding to the operation request is not the preset operation corresponding to the priority of the first conference terminal.

Optionally, the storage medium is also configured to store program codes for performing the following steps:
Step S4: judging whether access resources required by a first conference terminal for accessing a conference are sufficient before the first conference terminal accesses the conference;
Step S5, releasing access resources of a second conference terminal having a priority lower than a priority of the first conference terminal and allocating the released access resources to the first conference terminal in a case that the access resources required by the first conference terminal for accessing the conference are not sufficient.

Optionally, in the present embodiment, the storage medium may include, but not limited to, a U disk, a read-only memory (ROM), a random access memory (RAM), a mobile hard disk, a magnetic Disc, a CD-ROM or various other mediums capable of storing program codes.

Optionally, for the examples in the present embodiment, reference may be made to the examples described in the foregoing embodiments and alternative embodiments, and redundant description would be omitted herein.

Obviously, those skilled in the art should understand that each module or each step of the present disclosure described above may be implemented by common computing apparatus, which may be centralized on a single computing apparatus or distributed on multiple computing apparatuses. Optionally, they may be implemented by means of program codes executable by a computing apparatus so that they may be stored in a storage apparatus for execution by the computing apparatus. In certain cases, the shown or described steps herein may be performed in a different sequence, or some steps may be combined as an integral.

A hardware structure of a device for performing a control method for conference terminal rights is also provided by an embodiment of the present disclosure. Referring to Fig. 10, the apparatus includes:
at least one processor 100, and in Fig. 9, one processor 100 is taken as an example; and
a memory 101.

The device may further include an input apparatus 102 and an output apparatus 103. The processor 100, the memory 101, the input apparatus 102, and the output apparatus 103 in the device may be connected via a bus or in other manner, and in Fig. 10, the bus connection is taken as an example.

The memory 101, as a computer-readable storage medium, may be configured to store software programs, computer executable programs, such as program instructions / modules corresponding to the control method for conference terminal rights in the embodiments of the present disclosure. The processor 100 runs a software program, an instruction, and a module stored in the memory 101 so as to execute a functional application and a data processing of the server, that is, to accomplish the control method for conference terminal rights in the foregoing method embodiments.

The memory 101 may include a program storage area and a data storage area, wherein the program storage area may store an operating system, an application program required for at least one function; and the data storage area may store data created based on a use of a terminal device and the like. In addition, the memory 101 may include a high-speed random access memory and may further include non-volatile memory such as at least one magnetic disk storage device, flash memory device, or other non-volatile solid-state storage device. In some examples, the memory 101 may include memory remotely located with respect to the processor 100, and these remote memories may be connected to the terminal device through a network. Examples of such network include, but are not limited to, the Internet, intranets, local area networks, mobile communication networks, and combinations thereof.

The input apparatus 102 may be configured to receive input numerical or character information and generate key signal input related to the user's setting and function control of the terminal. The output apparatus 103 may include a display device such as a display screen.

At least one module is stored in the memory 101 and, when executed by the one or more processors 100, performs operations in the control method for conference terminal rights in any of the above embodiments.

### INDUSTRIAL UTILITY

The control method, system, apparatus and storage medium for conference terminal rights provided by the embodiments of the present disclosure improves the user experience.

## Claims

1. A control method for conference terminal rights, comprising:
receiving an operation request from a first conference terminal after the first conference terminal accesses a conference, wherein the operation request is used to instruct an operation performed on the first conference terminal, and a plurality of conference terminals accessing the conference have different priorities from each other; and
judging whether the operation corresponding to the operation request is a preset operation corresponding to a priority of the first conference terminal, wherein
allowing the first conference terminal to perform the operation if a judgment result is YES, or
refusing the first conference terminal to perform the operation if the judgment result is NO.

2. The method according to claim 1, wherein the step of judging whether the operation corresponding to the operation request is a preset operation corresponding to the priority of the first conference terminal comprises:
judging whether the operation corresponding to the operation request is present in a rights list, wherein the rights list is used to store the preset operation corresponding to the priority of the first conference terminal.

3. The method according to claim 1 or 2, wherein before the first conference terminal accesses the conference, the method further comprises:
judging whether access resources required by the first conference terminal for accessing the conference are sufficient; and
releasing access resources of a second conference terminal having a priority lower than the priority of the first conference terminal and allocating the released access resources to the first conference terminal in a case that the access resources required by the first conference terminal for accessing the conference are not sufficient.

4. A control method for conference terminal rights, comprising:
judging whether access resources required by a first conference terminal for accessing a conference are sufficient before the first conference terminal accesses the conference, wherein conference terminals accessing the conference have different priorities; and
releasing access resources of a second conference terminal having a priority lower than a priority of the first conference terminal and allocating the released access resources to the first conference terminal in a case that the access resources required by the first conference terminal for accessing the conference are not sufficient.

5. A control system for conference terminal rights, comprising:
a graphical user interface unit, called a GUI unit, which is configured to set a priority of each conference terminal for a conference and to configure a rights list of each conference terminal corresponding to the priority of the respective conference terminal, wherein the rights list is used for storing a preset operation corresponding to the respective conference terminal; and
a multi-point control signaling unit, called a MCU unit, which is configured to judge whether an operation corresponding to an operation request of a first conference terminal is present in the rights list of the first conference terminal configured by the GUI unit, wherein the first conference terminal is allowed to perform the operation if a judgment result is YES, or the first conference terminal is refused to perform the operation if the judgment result is NO, and wherein the operation request is used for indicating an operation of the first conference terminal.

6. The system according to claim 5, further comprising:
a resource management system unit, called a RMS unit, which is configured to allocate access resources required by the first conference terminal for accessing the conference to the first conference terminal in a calling process of the first conference terminal.

7. The system according to claim 6, wherein, the RMS unit is further configured to judge whether the access resources required by the first conference terminal for accessing the conference are sufficient, and to release access resources of a second conference terminal having a priority lower than the priority of the first conference terminal and allocate the released access resources to the first conference terminal in a case that the access resources required by the first conference terminal for accessing the conference are not sufficient.

8. A control apparatus for conference terminal rights, comprising:
a first receiving module, which is configured to receive an operation request from a first conference terminal after the first conference terminal accesses a conference, wherein the operation request is used to instruct an operation performed on the first conference terminal, and a plurality of conference terminals accessing the conference have different priorities from each other;
a first judgment module, which is configured to judge whether the operation corresponding to the operation request is a preset operation corresponding to a priority of the first conference terminal; and
a first execution module, which is configured to allow the first conference terminal to perform the operation if it is judged that the operation corresponding to the operation request is the preset operation corresponding to the priority of the first conference terminal, or refuse the first conference terminal to perform the operation if it is judged that the operation corresponding to the operation request is not the preset operation corresponding to the priority of the first conference terminal.

9. The apparatus according to claim 8, wherein the first judgment module comprises:
a first judgment unit, which is configured to judge whether the operation corresponding to the operation request is present in a rights list, wherein the rights list is used to store the preset operation corresponding to the priority of the first conference terminal.

10. The apparatus according to claim 8 or 9, further comprising:
a second judgment module, which is configured to judge whether access resources required by the first conference terminal for accessing the conference are sufficient before the first conference terminal accesses the conference; and
a first releasing-allocating module, which is configured to release access resources of a second conference terminal having a priority lower than the priority of the first conference terminal and allocate the released access resources to the first conference terminal in a case that the access resources required by the first conference terminal for accessing the conference are not sufficient.

11. A control apparatus for conference terminal rights, comprising:
a third judgment module, which is configured to judge whether access resources required by a first conference terminal for accessing a conference are sufficient before the first conference terminal accesses the conference, wherein conference terminals accessing the conference have different priorities; and
a second releasing-allocating module, which is configured to release access resources of a second conference terminal having a priority lower than the priority of the first conference terminal and allocate the released access resources to the first conference terminal in a case that the access resources required by the first conference terminal for accessing the conference are not sufficient.

12. A computer-readable storage medium storing computer-executable instructions which are configured to perform the control method for conference terminal rights according to any of claims 1 to 3 or the control method for conference terminal rights according to claim 4.
